# EUROPEAN PATENT APPLICATION

(11) **EP 0 597 281 A2**
(43) Date of publication of application: **18.05.1994**
(21) Application number: 93116829.8
(22) Date of filing: 19.10.1993
(51) Int. Cl.: C08G 18/63, C08G 18/79, C08G 18/40, C08G 18/72

(54) **A two-component polyurethane flexible foam system having improved elongation, tensile strength and tear resistance**

(30) Priority: 09.11.1992 US 973517
(71) Applicant: BASF CORPORATION, Parsippany, New Jersey 07054 (US)
(72) Inventor: Shrewsburg, James E., Southgate, Michigan 48195 (US); Winsky, Timothy S., Riverview, Michigan 48192 (US); Hass, James David, Riverview, Michigan 48192 (US)
(74) Representative: Langfinger, Klaus-Dieter, Dr.

(57) **Abstract**

The present invention is directed to flexible polyurethane foam formulations and the foams prepared using these formulations. The formulations are two components, comprising:
A) a diisocyanate mixture of modified diisocyanates or mixtures of modified and unmodified diisocyanates; and,
B) a resin containing, based on the total weight of the resin,
   1) from 60 percent to about 85 percent by weight conventional polyols,
   2) from 12 percent to about 30 percent by weight of a graft polymer dispersion,
   3) optionally up to about 1 percent by weight of a surfactant,
   4) from 0.3 percent to about 2.0 percent by weight water,
   5) from 0.2 percent to about 1.2 percent by weight of a catalyst capable of promoting urethane formation,
   6) optionally a chain extender, and
   7) optional additives such as pigments and fillers.
The foams prepared from the foregoing formulation exhibit enhanced tensile elongation, tensile strength, and tear strength.

## Description

The present invention is directed to flexible polyurethane foam formulations and the preparation of foams using said formulations having improved elongation, tensile strength, and tear resistance. Specifically, the invention is a two-component polyurethane system consisting of resin and isocyanate which is used to produce a flexible foam exhibiting the following improved physical properties: Elongation (110-330 percent), Tensile Strength (70-168 psi), Block Tear (7-16 ppi), and Graves Tear (at room temperature--14-32 ppi). These improved properties allow a greater latitude of application in areas where a requirement of a high degree of physical strength formerly precluded the use of flexible foams.

The preparation of polyurethanes by reaction of an organic polyisocyanate and a polyol is commonplace and well known in the art. The use of copolymers of propylene oxide and ethylene oxide in conjunction with initiators having specific functionalities has been found to confer useful structural and strength properties on the polyurethane foam and non-foam products generated using these copolymers. U.S. Patent No. 3,441,523 discloses the use of a mixture of diol- and triol-initiated polyethers as a means of affecting physical properties, e.g., tensile strength and elongation. U.S. Patent No. 3,857,800 shows the preparation of polyurethane foams with a reduced tendency to shrink by use of a combination of two polyols, one of which can be an ethylene oxide-capped polyoxypropylene polyol having a molecular weight of 3,000 to 6,000 and a primary hydroxyl content of 20 to 70 percent and the other of which can be an ethylene oxide-propylene oxide copolymer having a molecular weight of 500 to 2,000 and an ethylene oxide content of 20 to 80 percent by weight. U.S. Patent No. 5,059,633 describes flexible polyurethane foams having low compressive strength and relatively good tensile strength. These foams are prepared by reacting a specific polyol mixture consisting of: an ethylene oxide capped block copolymer having a hydroxyl number of from 14 to 65 and a functionality of 2.3 to 2.8 and optionally bi- or trifunctional block copolymers having a hydroxyl number of from 20 to 70 with an organic polyisocyanate. All of the above-mentioned formulations are limited for specific conventional polyether polyol formulations.

It is the object of the present invention to provide relatively low density, flexible foams with superior tensile strength, elongation, and tear strength without limiting the polyurethane system to such conventional polyether polyols and ratios of specific functionalities.

The present invention is a two-component polyurethane system consisting of resin and isocyanate used to produce flexible foams having improved Elongation (110-330 percent), Tensile Strength (70-168 psi), Block Tear (7-16 ppi), and Graves Tear (at room temperature-14-32 ppi). The two-component system consists of the following:
A. an organic diisocyanate; and,
B. a resin comprising:
   1. conventional polyols,
   2. graft polymer dispersions,
   3. optionally a chain extender,
   4. surfactants,
   5. water as a blowing agent, and
   6. catalysts capable of promoting urethane formation.

The isocyanates which may be used in this invention are modified and unmodified diisocyanates. Unmodified diisocyanates include aliphatic, cycloaliphatic and aromatic diisocyanates. Examples include 2,4- and 2,6-methylcyclohexylenediisocyanate), tetramethylene diisocyanates, cyclohexane diisocyanate, 2,4-toluene diisocyanate, 2,6-toluene diisocyanate, mixtures of 2,4- and 2,6-toluene diisocyanate, naphthalene-1,5-diisocyanate, 1-methoxyphenyl-2,4-diisocyanate, or 4,4'-diphenylmethane diisocyanate (MDI) and mixtures of 4,4'- and 2,4-diphenylmethane diisocyanate. Examples of modified isocyanates include those modified MDIs containing carbodiimide allophonate, urethane, or isocyanurate structures. According to the present invention, modified isocyanates constitute up to 100 percent by weight of the isocyanate component but in no case less than 80 percent. The other 20 percent may be made up of pure diisocyanates.

The preferred modified diisocyanates are mixtures of carbodiimide and urethanemodified MDI. The preferred pure diisocyanate is MDI. These isocyanates are prepared by conventional methods known in the art, e.g., phosgenation of the corresponding amine.

For purposes of the present invention, the use of polymeric isocyanates, e.g., polymethylene polyphenylene polyisocyanate, is not contemplated.

Conventional polyols make up between 60 and 85 percent by weight of the resin component. The conventional polyols contained in the resin are generally hydroxyl group-containing compounds (polyols) useful in the preparation of polyurethanes described in the Polyurethane Handbook in Chapter 3, §3.1, pages 42-61, and in Polyurethanes: Chemistry and Technology in Chapter II, §§III and IV, pages 32-47. Many hydroxyl group-containing compounds may be used, including simple aliphatic glycols, dihydroxy aromatics, bisphenols, and hydroxyl-terminated polyethers, polyesters, and polyacetals, among others. Extensive lists of suitable polyols may be found in the above references and in many patents, for example, in columns 2 and 3 of U.S. Patent No. 3,652,639; columns 2-6 of U.S. Patent No. 4,421,872; and columns 4-6 of U.S. Patent No. 4,310,632, these three patents being hereby incorporated by reference.

Preferably used are hydroxyl-terminated polyoxyalkylene and polyester polyols. The former are generally prepared by well-known methods, for example, by the base catalyst addition of an alkylene oxide, preferably ethylene oxide (oxirane), propylene oxide (methyloxirane), butylene oxide, or tetrahydrofuran to an initiator molecule containing on the average two or more active hydrogens. Examples of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine. Trihydric initiators such as glycerine, trimethylolpropane, trimethylolethane, N-alkylphenylenediamines, and mono-, di-, and trialkanolamines.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and Technology as well as in many patents, for example, U.S. Patents 1,922,451; 2,674,619; 1,922,459; 3,190,927; and 3,346,557.

Polyester polyols also represent preferred polyurethane-forming reactants. Such polyesters are well known in the art and are prepared simply by polymerizing polycarboxylic acids or their derivatives, for example, their acid chlorides or anhydrides, with a polyol. Numerous polycarboxylic acids are suitable, for example, malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example, the various aliphatic glycols, trimethylolpropane and trimethylolethane, α-methylglucoside, and sorbitol. Also suitable are low molecular weight polyoxyalkylene glycols such as polyoxyethylene glycol, polyoxypropylene glycol, and block and heteric polyoxyethylenepolyoxypropylene glycols. These lists of dicarboxylic acids and polyols are illustrative only and not limiting. An excess of polyol should be used to ensure hydroxyl termination, although carboxy groups are also reactive with isocyanates. Methods of preparation of such polyester polyols are given in the Polyurethane Handbook and in Polyurethanes: Chemistry and Technology.

Graft polymer dispersions are another type of polyol which is employed in amounts from about 12 percent to about 30 percent by weight of the resin component.

Graft polymer dispersions which have incorporated therein the vinylic polymers may be prepared (1) by the in situ free-radical polymerization of an ethylenically unsaturated monomer or mixture of monomers in a polyol, (2) by dispersion in a polyol of a preformed graft polymer prepared by free-radical polymerization in a solvent such as described in U.S. Patents 3,931,092; 4,014,846; 4,093,573; and 4,122,056; the disclosures of which are herein incorporated by reference, or (3) by low temperature polymerization in the presence of chain transfer agents. These polymerizations may be carried out at a temperature between 65°C and 170°C, preferably between 75°C and 135⁰C.

The amount of ethylenically unsaturated monomer employed in the polymerization reaction is generally from one percent to 60 percent, preferably from 10 percent to 40 percent, based on the total weight of the product. The polymerization occurs at a temperature between about 80° C and 170° C, preferably from 75° C to 135° C.

The polyols which may be employed in the preparation of the graft polymer dispersions are well known in the art. Both conventional polyols essentially free from ethylenic unsaturation such as those described in U.S. Patent No. Re. 28,715 and unsaturated polyols such as those described in U.S. Patent No. 3,652,659 and Re. 29,014 may be employed in preparing the graft polymer dispersions used in the instant invention, the disclosures of which are incorporated by reference. Representative polyols essentially free from ethylenic unsaturation which may be employed are well known in the art. They are often prepared by the catalytic condensation of an alkylene oxide or mixture of alkylene oxides either simultaneously or sequentially with an organic compound having at least two active hydrogen atoms such as evidenced by U.S. Patents 1,922,459; 3,190,927; and 3,346,557; the disclosures of which are incorporated by reference.

The unsaturated polyols which may be employed for preparation of graft copolymer dispersions may be prepared by the reaction of any conventional polyol such as those described above with an organic compound having both ethylenic unsaturation and a hydroxyl, carboxyl, anhydride, isocyanate, or epoxy group; or they may be prepared by employing an organic compound having both ethylenic unsaturation, as a hydroxyl, carboxyl, anhydride, or epoxy group as a reactant in the preparation of the conventional polyol. Representative of such organic compounds include unsaturated mono- and polycarboxylic acids and anhydrides such as maleic acid and anhydric, fumaric acid, crotonic acid and anhydride, propenyl succinic anhydride, and halogenated maleic acids and anhydrides, unsaturated polyhydric alcohols such as 2-butene-1,4-diol, glycerol allyl ether, trimethylolpropane allyl ether, pentaerythritol allyl ether, pentaerythritol vinyl ether, pentaerythritol diallyl ether, and 1-butene-3,4-diol, unsaturated epoxides such as 1-vinylcyclohexene monoxide, butadiene monoxide, vinyl glycidyl ether, glycidyl methacrylate, and 3-allyloxypropylene oxide.

As mentioned above, the graft polymer dispersions used in the invention are prepared by the in situ polymerization of an ethylenically unsaturated monomer or a mixture of ethylenically unsaturated monomers, either in a solvent or in the above-described polyols. Representative ethylenically unsaturated monomers which may be employed in the present invention include butadiene, isoprene, 1,4-pentadiene, 1,5-hexadiene, 1,7-octadiene, styrene, α-methylstyrene, methylstyrene, 2,4-dimethylstyrene, ethylstyrene, isopropylstyrene, butylstyrene, phenylstyrene, cyclohexylstyrene, benzylstyrene, and the like; substituted styrenes such as chlorostyrene, 2,5-dichlorostyrene, bromostyrene, fluorostyrene, trifluoromethylstyrene, iodostyrene, cyanostyrene, nitrostyrene, N,N-dimethylaminostyrene, acetoxystyrene,methyl-4-vinylbenzoate,phenoxystyrene,p-vinyldiphenylsulfide,p-vinylphenyl oxide, and the like; the acrylic and substituted acrylic monomers such as acrylonitrile, acrylic acid, methacrylic acid, methylacrylate, 2-hydroxyethyl acrylate, 2-hydroxyethyl methacrylate, methyl methacrylate, cyclohexyl methacrylate, benzyl methacrylate, isopropyl methacrylate, octyl methacrylate, methacrylonitrile, methyl α-chloroacrylate, ethyl α-ethoxyacrylate, methyl α-acetum, inoacrylate, butyl acrylate, 2-ethylhexyl acrylate, phenyl acrylate, phenyl methacrylate, α-chloroacrylonitrile, N,N-dimethylacrylamide, N,N-dibenzylacrylamide, N-butylacrylamide, methacryl formamide, and the like; the vinyl esters, vinyl ethers, vinyl ketones, etc., such as vinyl acetate, vinyl chloracetate, vinyl alcohol, vinyl butyrate, isopropenyl acetate, vinyl formate, vinyl acrylate, vinyl methacrylate, vinyl methoxyacetate, vinyl benzoate, vinyl iodide, vinyl toluene, vinyl naphthalene, vinyl bromide, vinyl fluoride, vinylidene bromide, 1-chloro-1-fluoroethylene, vinylidene fluoride, vinyl methyl ether, vinyl ethyl ether, vinyl propyl ether, vinyl butyl ether, vinyl-2-ethylhexyl ether, vinyl phenyl ether, vinyl-2-butoxyethyl ether, 2,4-dihydro-1,2-pyran, 2-butoxy-2'-vinyloxydiethyl ether, vinyl-2-ethylthioethyl ether, vinyl methyl ketone, vinyl ethyl ketone, vinyl phenyl ketone, vinyl phosphonates such as bis(β-chloroethyl) vinyl phosphonate, vinyl ethyl sulfide, vinyl ethyl sulfone, N-methyl-N-vinyl acetamide, N-vinyl-pyrrolidone, vinyl imidazole, divinyl sulfide divinyl sulfoxide, divinyl sulfone, sodium vinylsulfonate, methyl vinylsulfonate, N-vinyl pyrrole, and the like; dimethyl fumarate, dimethyl maleate, maleic acid, crotonic acid, fumaric acid, itaconic acid, monomethyl itaconate, butylaminoethyl methacrylate, dimethylaminoethyl methacrylate, glycidyl acrylate, allyl alcohol, glycol monoesters of itaconic acid, dichlorobutadiene, vinyl pyridine, and the like. Any of the known polymerizable monomers can be used, and the compounds listed above are illustrative and not restrictive of the monomers suitable for use in this invention. Preferably, the monomer is selected from the group consisting of acrylonitrile, styrene, methyl methacrylate, and mixtures thereof.

Illustrative initiators which may be employed for the polymerization of vinyl monomers are the well-known free radical types of vinyl polymerization initiators, for example, the peroxides, persulfates, perborates, percarbonates, azo compounds, etc., including hydrogen peroxide, dibenzoyl peroxide, acetyl peroxide, berzoyl hydroperoxide, t-butyl hydroperoxide, di-t-butyl peroxide, lauroyl peroxide, butyryl peroxide, diisopropylbenzene hydroperoxide, cumeme hydroperoxide, paramethane hydroperoxide, diα-cumyl peroxide, dipropyl peroxide, diisopropyl peroxide, difuroyl peroxide, ditriphenylmethylperoxide,bis(p-methoxybenzoyl)peroxide,p-monoethoxyberzoylperoxide, rubene peroxide, ascaridol, t-butyl peroxyberzoate, diethyl peroxyterephthalate, propyl hydroperoxide, isopropyl hydroperoxide, n-butyl hydroperoxide, t-butyl hydroperoxide, cyclohexyl hydroperoxide, trans-decalin hydroperoxide, α-methylbenzyl hydroperoxide, α-methyl-α-ethyl benzyl hydroperoxide, tetralin hydroperoxide, triphenylmethyl hydroperoxide, diphenylmethyl hydroperoxide, α,α'-azo-bis(2-methyl)butyronitrile, α,α'-azo-bis(2-methyl) heptonitrile, 1,1-azo-bis(1-cyclohexane)carbonitrile, dimethyl α,α'-azo-bis(isobutyronitrile), 4,4'-azo-bis(4-cyanopetanoic)acid,azo-bis(isobutyronitrile),1-t-amylazo-1-cyanocyclohexane, 2-t-butylazo-2-cyano-4-methoxy-4-methylpentane,2-t-butylazo-2-cyano-4-methylpentane,2-(t-butylazo)isobutyronitrile, 2-t-butylazo-2-cyanobutane, 1-cyano-1-(t-butylazo)cyclohexane, t-butyl-peroxy-2-ethylhexanoate, t-butylperpivalate, 2,5-dimethylhexane, 2,5-diper-2-ethylhexoate, t-butyl perneo-decanoate, t-butyl perbenzoate, t-butyl percrotonate, persuccinic acid, diisopropyl peroxydicarbonate, and the like; a mixture of initiators may also be used. Photochemically sensitive radical generators may also be employed. Generally from about 0.5 percent to about 10 percent, preferably from about 1 percent to about 4 percent, by weight of initiator based on the weight of the monomer, will be employed in the final polymerization.

Stabilizers may be employed during the process of making the graft polymer dispersions. One such example is the stabilizer disclosed in U.S. Patent No. 4,148,840, which comprises a copolymer having a first portion composed of an ethylenically unsaturated monomer or mixture of such monomers and a second portion which is a propylene oxide polymer. Other stabilizers which may be employed are the alkylene oxide adducts of copolymers of styrene-allyl alcohol.

Any suitable catalyst may be used including tertiary amines such as triethylenediamine, N-methylmorpholine, N-ethylmorpholine, diethylethanolamine, N-cocomorpholine, 1-methyl-4-dimethylaminoethylpiperazine, methoxypropyldimethylamine, N,N,N'-trimethylisopropyl propylenediamine, 3-diethylaminopropyldiethylamine, dimethylbenzylamine, and the like. Other suitable catalysts are, for example, dibutyltin dilaurate, dibutyltin diacetate, stannous chloride, dibutyltin di-2-ethyl hexanoate, stannous oxide, as well as other organometallic compounds such as are disclosed in U.S. Patent No. 2,846,408.

Chain extending agents, if employed in the preparation of polyurethane foams, include those having two functional groups bearing active hydrogen atoms. A preferred group of chain extending and/or crosslinking agents includes ethylene glycol, diethylene glycol, propylene glycol, or 1,4-butanediol. Generally, these compounds are present in amounts of from 0 percent to about 3 percent by weight of the resin.

A surface-active agent is generally necessary for production of high grade polyurethane foam according to the present invention since, in the absence of same, the foams may collapse or contain very large uneven cells. Numerous surface-active agents have been found satisfactory. Nonionic surface-active agents are preferred. Of these, the nonionic surface-active agents such as the well-known silicones have been found particularly desirable and are optionally present in amounts to about 1.0 percent by weight. Other surface-active agents which are operative, although not preferred, include polyethylene glycol ethers of long chain alcohols, tertiary amine or alkanolamine salts of lone chain alkyl acid sulfate esters, alkyl sulfonic esters, and alkyl arylsulfonic acids.

Additives which may be used in the process of the present invention include known pigments, such as carbon black, dyes, and flame retarding agents (e.g., tris-chloroethyl phosphates or ammonium phosphate and polyphosphate), stabilizers against aging and weathering, plasticizers, such as gamma butyrolactone, fungistatic and bacteriostatic substances, and fillers.

The main blowing and density controlling agent used according to the present invention is water and is present in amounts sufficient to blow the formulation, generally, from about 0.3 to about 2.0 percent by weight.

Having set forth the invention, the following examples are given by way of illustration and should not be construed as limiting in nature:
- Polyol A: is a trimethylolpropane-initiated polyoxypropylene polyoxyethylene block copolymer having a hydroxyl number of about 25 and a nominal molecular weight of 5,140.
- Polyol B: is a glycerine-initiated polyoxyethylene-polyoxypropylene heteric copolymer having a hydroxyl number of about 46 and a nominal molecular weight of 3,600.
- Polyol C: is a 31 percent solids, 1:1 acrylonitrile:styrene copolymer dispersed in a trimethylolpropane-initiated polyoxypropylene polymer having a polyoxyethylene cap and a hydroxyl number of about 25.
- Polyol D: is a dipropylene glycol-initiated polyoxypropylene-polyoxyethylene block copolymer having a hydroxyl number of about 29 and a nominal molecular weight of 3,473.
- Polyol E: is a glycerine-initiated polyoxypropylene-polyoxyethylene block copolymer having a hydroxyl number of about 27 and a nominal molecular weight of 4,047.
- Polyol F: is a toluenediamine-initiated polyoxyethylene polymer having a hydroxyl number of about 450 and a nominal molecular weight of 494.
- Polyol G: is a trimethylolpropane-initiated polyoxypropylene-polyoxyethylene block copolymer having a hydroxyl number of 35 and a nominal molecular weight of 4,121.
- LEXOREZ 1721-65: is a crosslinked poly(diethylene glycol, neopentyl glycol, 1,6-hexanediol adipate) having a hydroxyl number of about 65 and a nominal molecular weight of 3,780.
- PPK 839: is a 10 percent by weight carbon black dispersed in a dipropylene glycolinitiated polyoxypropylene-polyoxyethylene block copolymer having a hydroxyl number of about 29 and a nominal molecular weight of 3,473.
- METACURE: T-5 is an alkyl tin catalyst available from Air Products Corp.
- XF-F1045: is a proprietary catalyst blend available from Air Products Corp.
- DABCO BL-19: is bis(dimethylaminoethyl)ether.
- DABCO 33LV®: is triethylenediamine in dipropylene glycol.
- Q2-5212: is methyl(propylhydroxide, ethoxylated) bis(trimethylsiloxy)silane available from Dow Corning.
- HexChem 977: is potassium octoate in dipropylene glycol.
- B-4113: is a silicone surfactant available from Goldschmidt.
- ISO 1: is a 50:50 mixture of a liquid solvent free carbodiimide modified 4,4'diphenylmethane diisocyanate having an isocyanate content of 29.5 percent by weight and a solvent free urethane modified diphenylmethane diisocyanate having an isocyanate content of 23 percent by weight.
- ISO 2: is a polymethylene polyphenylisocyanate.
All amounts given are in weight percent uniess otherwise indicated.

Examples 1, 2 and 4 were prepared using standard hand mix and open pour techniques. Predetermined amounts of resin and iso were added to a container. The resin and iso were mixed for about 8 seconds at about 3,000 rpm using a Lighting mixer equipped with a German mix blade. The mixture was poured into a preheated prepared mold. The mold was then clamped shut. The foam product was demolded and tested. All tests were performed using standard ASTM procedures.

Example 3 was prepared as a "machine" mix. A PU-15 machine equipped with a 10mm Cannon "L" head was used rather than hand mixing. The resin and iso were preheated to 110° F and shot into a preheated prepared mold. The mold was then clamped shut. The foam product was demolded and tested.

### EXAMPLES

| EXAMPLES | 1 | 2 | 3 | 4 |
|---|---|---|---|---|
| POLYOL A | --- | 62.04 | --- | --- |
| POLYOL B | --- | 0.96 | 3.01 | 1.00 |
| POLYOL C | 15.00 | 28.90 | 15.15 | 15.00 |
| POLYOL D | --- | --- | 74.22 | 75.41 |
| POLYOL E | 78.45 | --- | --- | --- |
| LEXOREZ 1721-65 | --- | 1.64 | 2.01 | 2.00 |
| PPK 839 | --- | 1.93 | --- | --- |
| METACURE T-5 | --- | --- | 0.02 | --- |
| XF-F1045 | --- | --- | 0.13 | --- |
| DABCO BL-19 | 0.20 | --- | 0.05 | 0.20 |
| DABCO 33LV® | 0.40 | 0.48 | --- | 0.40 |
| Q2-5212 | 0.50 | 0.29 | --- | 0.70 |
| ETHYLENE GLYCOL | 4.70 | 1.93 | 4.75 | 4.70 |
| WATER | 0.75 | 1.83 | 0.56 | 0.59 |
| TRIETHYLAMINE | --- | --- | 0.10 | --- |
| ISO 1 | 45.3 | 52.0 | 45.3 | 46.1 |

**TABLE I**

| EXAMPLES | 1 | 2 | 3+ | 4 |
|---|---|---|---|---|
| CORE DENSITY (pcf) | 15.23* | 7.48 | 11.85 | 13.46* |
| TENSILE STRENGTH (psi) | 102.6 | 71.9 | 143 | 111.0 |
| ELONGATION (%) | 143.0 | 170.0 | 234.5 | 246.7 |
| BLOCK TEAR (ppi) | 8.48 | 7.0 | 9.1♢ | 10.8 |
| GRAVES TEAR 77°F (ppi) | 21.75 | 14.9 | 24.1 | 25.5 |

| | | | | |
|---|---|---|---|---|
| * = MOLDED | | | | |
| + = MACHINE MIX | | | | |
| ♢ = SPLIT TEAR | | | | |

The improved physical characteristics, such as tensile strength, elongation, and tear resistance, are shown in Table I for Examples 1-4.

### COMPARATIVE EXAMPLE I

Comparative Example I was prepared using the same technique as used for Examples I, 2 and 4. Results of the physical tests are listed below:

| | |
|---|---|
| POLYOL B 0.94 | ISO 2 47.0 |
| POLYOL C 9.36 | |
| POLYOL F 2.81 | |
| POLYOL G 79.71 | CORE DENSITY (pcf) 7.24 |
| LEXOREZ 1721-65 1.59 | TENSILE (psi) 32.2 |
| PPK 839 1.88 | ELONGATION % 53 |
| B 4113 0.20 | BLOCK TEAR (ppi) 2.1 |
| BL 19 0.08 | |
| HEXCHEM 977 0.24 | |
| METACURE T-5 0.01 | |
| TRIETHANOLAMINE 0.98 | |
| WATER 2.20 | |

## Claims

1. A two-component flexible polyurethane foam system having improved tensile strength, elongation and tear resistance, consisting essentially of:
a) an organic isocyanate selected from the group consisting of mixtures of modified diisocyanates and mixtures of modified and unmodified diisocyanates; and,
b) a resin containing, based on the total weight of the resin,
1) from 60 percent to about 85 percent by weight of conventional polyol,
2) from 12 percent to about 30 percent by weight of a graft polymer dispersion,
3) optionally up to about 1 percent by weight of a surfactant,
4) from 0.3 percent to about 2.0 percent by weight water,
5) from 0.2 percent to about 1.2 percent by weight of a catalyst capable of promoting urethane formation,
6) from 0 to about 3.0 percent by weight of a chain extender, and
7) optionally pigments, flame retarding agents, fillers, and stabilizers against weathering and aging.

2. A foam system as claimed in claim 1, wherein the isocyanate is a 50:50 blend of a carbodiimide modified diphenylmethane diisocyanate and a urethane modified diphenylmethane diisocyanate.

3. A flexible composition consisting of the two-component system as claimed in claim 1, having a tensile elongation of from 110 percent to 330 percent, a tensile strength of from 70 psi to 168 psi, a block tear of from 7 ppi to 16 ppi, and a graves tear at 77° F of from 14 ppi to 32 ppi.
